# EUROPEAN PATENT SPECIFICATION

(11) **EP 0 803 854 B1**
(45) Date of publication and mention of the grant of the patent: **17.11.1999**
(21) Application number: 97106587.5
(22) Date of filing: 21.04.1997
(51) Int. Cl.: G09F 13/36, G01D 7/00

(54) **Multi-functional indicator device**
Mehrzweck-Anzeigevorrichtung
Dispositif d'affichage à fonctions multiples

(30) Priority: 23.04.1996 IT TO960323
(43) Date of publication of application: 29.10.1997
(73) Proprietor: FIAT AUTO S.p.A., 10135 Torino (IT)
(72) Inventor: Fassbender, Peter, 10020 Pecetto Torinese (IT); de Aguilar, Tancredi, 10123 Torino (IT)
(74) Representative: Plebani, Rinaldo

(56) References cited:
- EP-A- 0 023 281
- DE-A- 3 505 788
- PATENT ABSTRACTS OF JAPAN vol. 12, no. 12 (P-655), 14 January 1988 & JP 62 170815 A (KOITO MFG CO LTD), 27 July 1987,
- PATENT ABSTRACTS OF JAPAN vol. 14, no. 360 (P-1088), 3 August 1990 & JP 02 134519 A (MITSUBISHI ELECTRIC CORP), 23 May 1990,
- PATENT ABSTRACTS OF JAPAN vol. 8, no. 86 (P-269), 19 April 1984 & JP 59 003215 A (SANYO DENKI KK ET AL.), 9 January 1984,

## Description

The present invention relates to a multi-functional indicator device adapted to be fitted in a control panel to provide indications on one or more quantities relating to an element of an apparatus of any known type.

It is known that in all technical fields the measurement and control of physical quantities subject to variations is of fundamental importance. In some sectors, though, it is not sufficient for measurement instruments or detection systems for detecting the quantities of interest merely to allow precise and reliable reading, but it is necessary, or rather appropriate, to have available information acquired from the instruments in a clear manner which is easily intelligible and such that, as far as possible, it makes situations requiring attention, or which are of potential danger, immediately evident even to an observer whose attention is occupied.

This emphasises the importance of indicator devices, which term here and in the following description is intended to include a device, however connected and including one or more measurement instruments, able to display information on one or more physical quantity.

Generally speaking there are two main types of indicator device known, that is analogue and digital type.

The first provide indications on the controlled quantity by the displacement of a movable element, typically a needle, over a quadrant on which reference values are marked.

Digital devices, on the other hand, show a numerical value on a display representative, possibly according to a certain scale, of the controlled quantity.

Both types of device are widely used: however, they have the main disadvantage of not sufficiently attracting the attention of an observer, above all when critical conditions are approaching and at least of not being integrated with suitable visual or acoustic warning systems (such as warning lamps or acoustic alarms): examples are the coolant liquid temperature indicator in a motor vehicle which either in analogue form (a needle movable over a temperature scale) or in digital form (instantaneous temperature value expressed by a number) is often ignored by the driver.

Digital indicators, moreover, are often not easy to read, at least because they are not of large dimensions (which would increase the cost greatly) and in any event the indication which they provide, being expressed by a number, does not give an immediate perception. Even analogue indicators, whilst being more easily read, do not communicate to the human eye an immediate message.

Finally, the devices of known type do not always lend themselves to multiple applications in the sense of being able to be used, without substantial modifications, to measure different quantities, at least simply by varying the detection instruments to which they are connected.

The object of the present invention is that of providing a multi-functional indicator device, that is to say one able to provide indications on one or more physical quantities, which will be free from the disadvantages of known devices discussed above. In particular, one object of the invention is to provide a multi-functional indicator device which can be read easily, providing immediate perception and able to attract the attention even of an occupied observer when the conditions indicated exceed a critical threshold.

According to the invention, therefore, there is provided a multi-functional indicator device characterised in that it comprises: a casing containing a liquid having predetermined optical properties, with at least one transparent surface through which the level of the said liquid is visible; and means for transmitting through the said liquid an electromagnetic radiation of predetermined wavelength in such a way that the liquid is illuminated with a predetermined colour.

The device further includes a pump which allows the level of the liquid in the casing to be varied and sensor systems connected to a processor and control unit in such a way that the wavelength of the electromagnetic radiation and the level of the liquid can be established on the basis of the data detected by the said sensor systems.

In this way the device according to the invention can be formed in a simple and economic manner, practically to any dimensions without drastic increases in costs which would be experienced, on the other hand, for example, in the production of large displays of known types.

Further objects and advantages of the present invention will become clearly apparent from the following description of an embodiment, given purely by way of non-limitative example with reference to the attached Figures of the drawings which schematically illustrate the essential elements of the device.

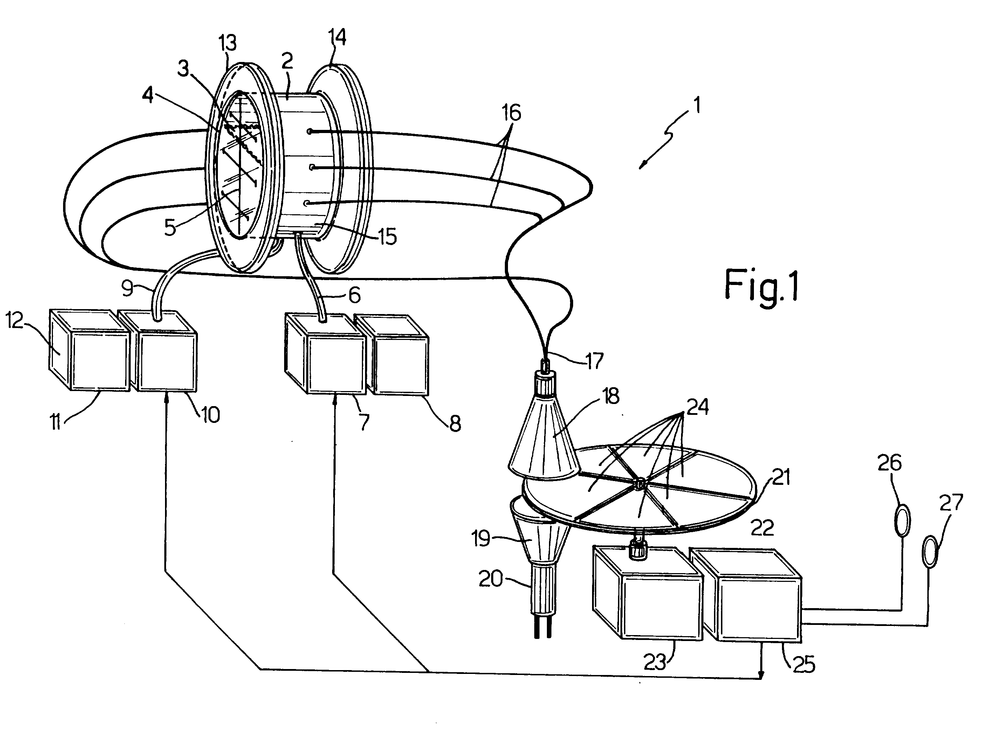

With reference to the attached drawing, a multi-functional indicator device is generally indicated 1, and is adapted, for example, to be mounted on the dashboard of a vehicle to indicate the level and/or a characteristic quantity (such as the temperature) of a service liquid.

The device 1 comprises a cylindrical casing 2 containing a liquid 3 at a predetermined level and provided with a transparent wall 4 on which is marked a scale for reading the level 5 and through which the liquid 3 is visible. To the lower part of the casing 2 are connected, by a duct 6, a pump 7 and a reservoir 8 for the liquid 3; moreover, via a second duct 9, a second pump 10 and a reservoir 11 for a gaseous substance 12 are also connected to the casing. The casing 2 is fitted in a support constituted by two flanges 13 and 14 adapted to be introduced into a control panel such as, for example, the dashboard of a motor vehicle.

On the lateral surface 15 of the casing 2 are disposed the ends of a certain number of optical fibres 16 collected in a bundle 17 by a collector 18. Facing the collector 18 is a source 19 of electromagnetic radiation, for example visible light, inserted in a support 20; between the source 19 and the collector 18 is interposed a support 21 of circular form rotating about its axis 22 and driven by a motor 23; on the support 21 is mounted a predetermined number of filters 24 each able to absorb a different part of the electromagnetic spectrum.

The motor 23 and the pumps 7 and 10 are controlled by a processor and control unit 25, for example on the basis of information received by sensors 26 and 27 concerning one or more quantities to be controlled, such as, for example, the level and the temperature of a service liquid in a reservoir, in particular the coolant liquid of the engine of a motor vehicle.

Hereinafter, for a better understanding of the operation of the device according to the invention, reference will be made to this latter specific application without loss of generality thereby: thus the sensors 26 and 27 in the drawing represent, respectively, the level and temperature detectors of the engine coolant liquid of a motor car. The device according to the invention in this case allows these two quantities to be evaluated: the level of the coolant liquid of the engine is indicated proportionally by the level of the liquid 3 in the casing 2, measured by a simpler reading on the scale 5, whilst a conventional indication of its temperature is given by the colour assumed by the liquid 3.

The colour is conferred on the liquid 3 by the illuminating radiation emitted by the source 19, which illuminates this liquid after having travelled through one of the filters 24 mounted on the support 21 and having assumed its colour. So that the liquid 3 will be illuminated uniformly and will assume the desired colouration when traversed by the radiation it must be provided with predetermined optical properties: for example an aqueous solution of suitable density or the like can be used.

The processing and control unit 25 controls both the pump 7 by means of which the level of the liquid 3 is varied, by transferring it from the reservoir 8 to the casing 2 or vice versa, and the motor 23, which causes the filter traversed by the illuminating radiation and therefore the colour imparted to the liquid 3 to change. A dark blue colour can indicate for example a low temperature of the coolant liquid gradually becoming lighter to correspond to a progressive rise in temperature, whilst becoming red would indicate operation at high temperature.

Indication that the coolant liquid has reached a dangerous temperature can be represented by the presence of gas bubbles in the liquid 3, obtained by the introduction of gas 12 from the reservoir 11 into the casing 2 via the pump 10.

Instead of the use of a single source the radiation from which is filtered to modify its wavelength, a possible variant envisages a system of sources each having its own wavelength: in this embodiment the colour assumed by the liquid indicator is determined by the source which is employed from time to time and it is not necessary to use filters. Referring again to the drawing, on the support 20 the system of electromagnetic radiation sources 19 is in this case mounted, the operation of which sources is controlled directly by the processor and control unit 25; clearly in this case neither the motor 23 nor the filters 24 with their associated supports 21 are necessary. Alternatively, the same effect could be obtained by using a single source able to emit electromagnetic radiation of variable wavelength, still under the control of the processor and control unit.

It is also clear that the physical quantities detected can be different from those indicated in the above example: to remain within the automobile field, the device can be used to indicate not only the level and the state of any other service fluid (fuel, brake fluid, clutch fluid, engine lubricating oil, battery electrolyte) but also the state of the mechanical elements subject to wear, such as brake pads or clutch disc: the colour of the indicator liquid can in this case assume a different significance from temperature, such as viscosity, state of wear or deterioration or other property. Essentially, the device according to the invention can be applied to any type of element of known apparatus of which it is desired to provide an indication of a physical quantity (not necessarily a level) and/or a conventional evaluation of the state (temperature, viscosity, load conditions, state of wear or deterioration).

Moreover, several sensors can be connected to the same device disposed on different elements: in this case each element would correspond to a different colour of the indicator liquid (for example still in the case of motor cars, blue for the coolant liquid, yellow for the petrol, brown for the lubricant) whilst the intensity or lightening of this colour will represent the state of the element or its characteristic physical property. In this way a single indicator can be utilised to monitor several physical quantities selectively.

Finally, it is evident that the device described can have modifications and variations introduced thereto which do not depart from the ambit of protection defined by the claims.

In particular, the arrangement of the filters or the way in which relative movement between the filters and light source is achieved can be modified: for example the filters can be mounted on a rectangular support able to translate in its own plane.

Moreover, an indicator liquid provided with different optical properties can be used, in particular one able to assume a given colouration when excited by a radiation of predetermined wavelength, possibly outside the visible spectrum.

Also the achievement of critical conditions, indicated by the formation of gas bubbles in the indicator liquid, can be achieved with different means from those described, which means however are able to make a gaseous substance bubble through this liquid, for example air taken from the engine supply system.

## Claims

1. A multi-functional indicator device characterised in that it comprises a casing (2) containing a liquid (3) having predetermined optical properties, with at least one transparent surface (4) through which the level of the said liquid (3) is visible, and means for transmitting electromagnetic radiation of predetermined wavelength through the said liquid in such a way that the liquid is illuminated with a predetermined colour.

2. A device according to the preceding claim, characterised in that it includes a pump (7) operable to vary the level of the said liquid (3) in the said casing (2).

3. A device according to Claim 1 or Claim 2, characterised in that it includes sensor systems (26, 27) connected to a processor and control unit (25) in such a way that the wavelength of the said electromagnetic radiation and the level of the said liquid (3) is established on the basis of data detected by the said sensor systems (26, 27).

4. A device according to any preceding claim, characterised in that the said means for transmitting the electromagnetic radiation comprise at least one source (19) of electromagnetic radiation, a system (24) of filters operable to vary the wavelength of the said electromagnetic radiation and a bundle of optical fibres (17) operable to transmit the said radiation through the said liquid (3).

5. A device according to the preceding claim, characterised in that the said filter system (24) is mounted on a movable support (21) driven by a motor (23) in such a way that the said filters (24) are selectively carried one at a time between the said source (19) and the said bundle of optical fibres (17).

6. A device according to the preceding claim, characterised in that the said support (21) is a circular disc which rotates about its axis (22) driven by the said motor (23).

7. A device according to any of Claims from 1 to 3, characterised in that the said means for transmitting the electromagnetic radiation comprise a system (19) of monochromatic sources of electromagnetic radiation of different wavelength and a bundle of optical fibres (17) operable to transmit the said radiation through the said liquid (3), the source which transmits its radiation to the said optical fibres being established by the said processor and control unit (25).

8. A device according to Claim 6 or Claim 7, characterised in that it includes means (9, 10, 11) for introducing a gaseous substance (12) into the interior of the casing (2), the said gaseous substance (12) being able to form bubbles in the said liquid (3).

9. A device according to the preceding claim, characterised in that the said means (9, 10, 11) for introducing the said gaseous substance (12) operate under the control of the said processor and control unit (25).

10. A device according to any preceding claim, characterised in that the said casing (2) is carried by a support (13, 14) which can be fitted to a control panel.

## Patentansprüche

1. Multifunktionale Anzeigevorrichtung, dadurch gekennzeichnet, daß sie versehen ist mit einem Gehäuse (2), das eine Flüssigkeit (3) mit vorgegebenen optischen Eigenschaften enthält und wenigstens eine transparente Oberfläche (4) aufweist, durch die der Pegel der Flüssigkeit (3) beobachtet werden kann, und einer Einrichtung zum Senden elektromagnetischer Strahlung mit vorgegebener Wellenlänge durch die Flüssigkeit, derart, daß die Flüssigkeit mit einer vorgegebenen Farbe beleuchtet wird.

2. Vorrichtung nach dem vorangehenden Anspruch, dadurch gekennzeichnet, daß sie eine Pumpe (7) enthält, die betätigt werden kann, um den Pegel der Flüssigkeit (3) im Gehäuse (2) zu ändern.

3. Vorrichtung nach Anspruch 1 oder Anspruch 2, dadurch gekennzeichnet, daß sie Sensorsysteme (26, 27) enthält, die mit einer Prozessor- und Steuereinheit (25) so verbunden sind, daß die Wellenlänge der elektromagnetischen Strahlung und der Pegel der Flüssigkeit (3) auf der Grundlage der von den Sensorsystemen (26, 27) erfaßten Daten eingestellt werden.

4. Vorrichtung nach irgendeinem der vorangehenden Ansprüche, dadurch gekennzeichnet, daß die Einrichtung zum Senden der elektromagnetischen Strahlung wenigstens eine Quelle (19) für elektromagnetische Strahlung, ein System (24) von Filtern, die so betätigt werden können, daß sie die Wellenlänge der elektromagnetischen Strahlung ändern, und ein Bündel von Lichtleitfasern (17) umfaßt, die so betrieben werden können, daß sie die Strahlung durch die Flüssigkeit (3) senden.

5. Vorrichtung nach dem vorangehenden Anspruch, dadurch gekennzeichnet, daß das Filtersystem (24) auf einem beweglichen Träger (21) montiert ist, der von einem Motor (23) so angetrieben wird, daß die Filter (24) wahlweise einzeln zwischen die Quelle (19) und das Bündel der Lichtleitfasern (17) geführt werden.

6. Vorrichtung nach dem vorangehenden Anspruch, dadurch gekennzeichnet, daß der Träger (21) eine kreisförmige Scheibe ist, die um ihre Achse (22) rotiert, die vom Motor (23) angetrieben wird.

7. Vorrichtung nach irgendeinem der Ansprüche 1 bis 3, dadurch gekennzeichnet, daß die Vorrichtung zum Senden der elektromagnetischen Strahlung versehen ist mit einem System (19) von monochromatischen Quellen elektromagnetischer Strahlung unterschiedlicher Wellenlänge und einem Bündel von Lichtleitfasern (17), die so betrieben werden können, daß sie die Strahlung durch die Flüssigkeit (3) senden, wobei die Quelle, die ihre Strahlung zu den Lichtleitfasern aussendet, von der Prozessor- und Steuereinheit (25) eingestellt wird.

8. Vorrichtung nach Anspruch 6 oder Anspruch 7, dadurch gekennzeichnet, daß sie eine Einrichtung (9, 10, 11) enthält zum Einleiten einer gasförmigen Substanz (12) in das Innere des Gehäuses (2), wobei die gasförmige Substanz (12) in der Flüssigkeit (3) Blasen bilden kann.

9. Vorrichtung nach dem vorangehenden Anspruch, dadurch gekennzeichnet, daß die Einrichtung (9, 10, 11) zum Einleiten der gasförmigen Substanz (12) unter der Steuerung der Prozessor- und Steuereinheit (25) arbeitet.

10. Vorrichtung nach irgendeinem der vorangehenden Ansprüche, dadurch gekennzeichnet, daß das Gehäuse (2) von einem Träger (13, 14) getragen wird, der in eine Steuertafel eingesetzt werden kann.

## Revendications

1. Dispositif d'affichage à fonctions multiples, caractérisé en ce qu'il comprend un boîtier (2) contenant un liquide (3) qui a des propriétés optiques prédéterminées, avec au moins une surface transparente (4) à travers laquelle le niveau dudit liquide (3) est visible, et des moyens de transmission d'un rayonnement électromagnétique de longueur d'onde prédéterminée à travers ledit liquide d'une manière telle que le liquide est éclairé avec une couleur prédéterminée.

2. Dispositif selon la revendication précédente, caractérisé en ce qu'il comprend une pompe (7) qui sert à faire varier le niveau dudit liquide (3) dans ledit boîtier (2).

3. Dispositif selon la revendication 1 ou la revendication 2, caractérisé en ce qu'il comprend des systèmes de détection (26,27) connectés à un processeur et une unité de commande (25) d'une manière telle que la longueur d'onde dudit rayonnement électromagnétique et le niveau dudit liquide (3) sont établis sur la base des données détectées par lesdits systèmes de détection (26,27).

4. Dispositif selon une quelconque des revendications précédentes, caractérisé en ce que les dits moyens de transmission du rayonnement électromagnétique comprennent au moins une source (19) de rayonnement électromagnétique, un système (24) de filtres servant à modifier la longueur d'onde dudit rayonnement électromagnétique, et un faisceau de fibres optiques (17) servant à transmettre ledit rayonnement à travers ledit liquide (3).

5. Dispositif selon la revendication précédente, caractérisé en ce que ledit système de filtres (24) est monté sur un support mobile (21) entraîné par un moteur (23) d'une manière telle que lesdits filtres (24) sont sélectivement amenés, un à la fois, entre la dite source (19) et ledit faisceau de fibres optiques (17).

6. Dispositif selon la revendication précédente, caractérisé en ce que ledit support (21) est un disque circulaire qui tourne autour de son axe (22) entraîné par ledit moteur (23).

7. Dispositif selon une quelconque des revendications 1 à 3, caractérisé en ce que lesdits moyens de transmission du rayonnement électromagnétique comprennent un système (19) de sources monochromatiques de rayonnement électromagnétique de longueur d'onde différente, et un faisceau de fibres optiques (17) servant à transmettre ledit rayonnement à travers ledit liquide (3), la source qui transmet son rayonnement auxdites fibres optiques étant établie par ledit processeur et l'unité de commande (25).

8. Dispositif selon la revendication 6 ou la revendication 7, caractérisé en ce qu'il comprend des moyens (9,10,11) d'introduction d'une substance gazeuse (12) à l'intérieur du boîtier (2), ladite substance gazeuse (12) pouvant former des bulles dans le dit liquide (3).

9. Dispositif selon la revendication précédente, caractérisé en ce que lesdits moyens (9,10,11) d'introduction de ladite substance gazeuse (12) fonctionnent sous la commande dudit processeur et de l'unité de commande (25).

10. Dispositif selon une quelconque des revendications précédentes, caractérisé en ce que ledit boîtier (2) est porté par un support (13, 14) qui peut être monté sur un panneau de commande.
